# DEMANDE DE BREVET EUROPEEN

(11) **EP 1 524 753 A1**
(43) Date de publication de la demande: **20.04.2005**
(21) Numéro de dépôt: 04300561.0
(22) Date de dépôt: 30.08.2004
(51) Int. Cl.: H02K 7/18, F02N 15/04, H02K 7/14

(54) **Ensemble comprenant un alternateur et un organe d'accouplement à un moteur, notamment à un moteur de véhicule automobile**

(30) Priorité: 11.09.2003 FR 0310690
(71) Demandeur: Peugeot Citroen Automobiles SA, 78140 Vélizy Villacoublay (FR)
(72) Inventeur: GODEFROY, Emmanuel, 92100, BOULOGNE BILLANCOURT (FR)
(74) Mandataire: Grynwald, Albert

(57) **Abrégé**

L'invention concerne un ensemble comprenant un alternateur et un organe d'accouplement à un moteur.

L'alternateur (4) fonctionne au moins en un premier mode dit de génération d'énergie électrique. L'organe d'accouplement (5) comprend un variateur de vitesse présentant au moins deux rapports de démultiplication de vitesses de rotation distincts. Le variateur de vitesse permet l'accouplement dans le mode de fonctionnement en générateur d'énergie électrique avec un premier rapport de démultiplication de vitesses de rotation lorsque le moteur (2) est animé d'une vitesse de rotation comprise dans une première plage, dite basse, et avec au moins un deuxième rapport de démultiplication de vitesses de rotation lorsque le moteur (2) est animé d'une vitesse de rotation comprise dans une deuxième plage, dite haute. Les rapports de démultiplication de vitesses de rotation sont déterminés de manière à limiter la plage des vitesses de rotation de l'alternateur (4).

## Description

L'invention concerne une machine électrique fonctionnant au moins en tant que générateur d'énergie électrique, et plus particulièrement un alternateur muni d'un organe d'accouplement à un moteur.

Elle trouve une application préférée, bien que non exhaustive, dans le domaine de l'industrie automobile.

Dans ce domaine, le moteur est préférentiellement un moteur à combustion interne.

Pour fixer les idées, sans que cela restreigne en rien la portée, on se placera dans ce qui suit dans le cas de l'application préférée de l'invention.

Dans ce cadre d'application, il est bien connu d'associer une dynamo ou un alternateur au moteur à combustion interne.

Un alternateur comprend une partie fixe ou stator (induit) qui comporte des bobinages constituant des enroulements générateurs de courant alternatif sinusoïdal. Le plus souvent, les alternateurs actuels sont de type triphasé. Chaque bobinage est relié par une première extrémité à une autre bobine et, par une seconde extrémité à un pont de diodes redresseuses, ce qui permet de générer un courant continu. Un alternateur comprend aussi une partie mobile ou rotor (inducteur). Cet inducteur est alimenté par un courant d'excitation. De ce fait, lorsque l'inducteur est mis en rotation, il se comporte comme un électroaimant et l'alternateur génère un courant électrique par couplage électromagnétique.

Pour des raisons de compromis technico-économique, la technologie généralement utilisée est celle dite d' "alternateur à griffes".

L'alternateur génère l'énergie électrique nécessaire au bon fonctionnement de divers appareils consommateurs (phares, essuie-glaces, lève-vitres, électronique embarquée, etc.), en régime de croisière (le moteur à combustion interne étant démarré).

Il permet également de charger une batterie, constituant une source d'énergie auxiliaire. A celle-ci sont dévolues deux fonctions principales. Elle permet de fournir une énergie électrique instantanée importante lors du démarrage du moteur à combustion interne, du fait, notamment, de sa faible impédance interne. Elle est alors connectée à un démarreur. Elle alimente, au moins momentanément, certains circuits électriques lorsque le véhicule est à l'arrêt (tableau de bord, plafonnier, etc.). La batterie peut également fournir le courant d'excitation de l'inducteur.

Les batteries généralement utilisées fournissant une tension de 12 V, les alternateurs sont dimensionnés pour fournir, en régime de croisière, une tension continue (après redressement) de l'ordre de 14 V.

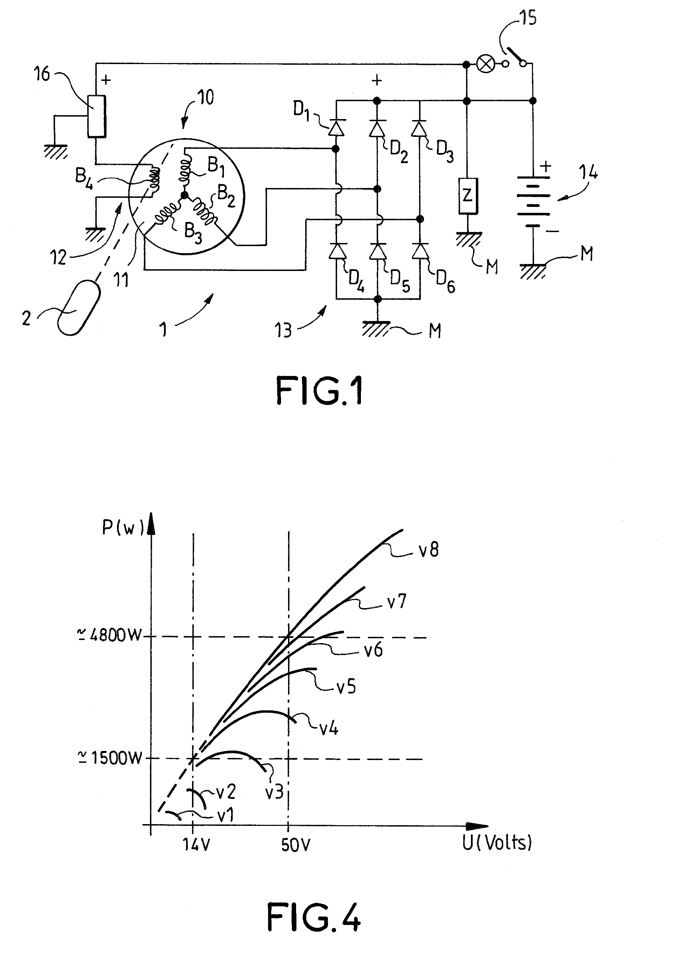

La figure 1 illustre très schématiquement un montage électrique 1 montrant les interconnexions principales entre les appareils consommateurs d'énergie électrique, l'alternateur et la batterie.

L'alternateur 10 est du type triphasé. Il comprend un stator 11 à trois bobinages : B1 à B3 et un rotor 12 (bobinage Br). L'alternateur 10 est entraîné par le moteur à combustion interne du véhicule, sous la référence générale 2.

Les trois bobinages, B1 à B3, du stator alimentent un pont 13 de six diodes de redressement : D1 à D6, de manière à obtenir un redressement double alternance pour chaque phase. Chaque branche du pont 13 comprend deux diodes en série, par exemple D1 et D4, disposées entre la masse M et le pôle "+" d'une batterie 14, le pôle "-" de cette batterie étant relié à la masse M.

L'excitation de l'inducteur (bobinage Br du rotor 12) est fournie par la batterie 14 via un contacteur 15 actionnable de l'intérieur du véhicule et un dispositif régulateur 16. Ce dispositif a pour fonction de réguler la tension aux bornes de la batterie et des consommateurs, cette tension étant générée par l'alternateur 10. Pour la régulation, on agit sur le courant d'excitation.

Le contacteur 15 est monté pour permettre l'amorçage de l'alternateur.

Pour le démarrage d'un moteur à combustion interne, on utilise une deuxième machine électrique, appelée démarreur (non représenté). Celui-ci est couplé mécaniquement, de façon provisoire pendant la phase de démarrage, au moteur à combustion interne de façon à l'entraîner en rotation jusqu'à obtenir le démarrage. L'alimentation en énergie électrique est assurée par la batterie 14.

Dans certains véhicule récents, mettant à profit la possibilité de réversibilité de fonctionnement d'un alternateur, on a utilisé celui-ci, à la fois comme démarreur, c'est-à-dire comme moteur électrique, lors de la phase de démarrage, et comme générateur d'énergie électrique, en régime de croisière, c'est-à-dire lorsque le moteur à combustion interne est démarré. Cette disposition permet d'éviter l'utilisation de deux machines électriques distinctes.

Cependant, les exigences qui se font sentir ne sont pas de même nature dans ces deux modes de fonctionnement.

Lors de la phase de démarrage, il est nécessaire que l'alternateur, utilisé en mode moteur, tourne plus rapidement que le moteur à combustion interne qu'il entraîne, avec un couple important. Le couplage entre ce moteur et l'alternateur en mode moteur peut être réalisé par une liaison mécanique simple à base de poulies et de courroies.

Actuellement, ce mode de couplage est aussi utilisé couramment pour entraîner un alternateur utilisé seulement en mode générateur d'énergie.

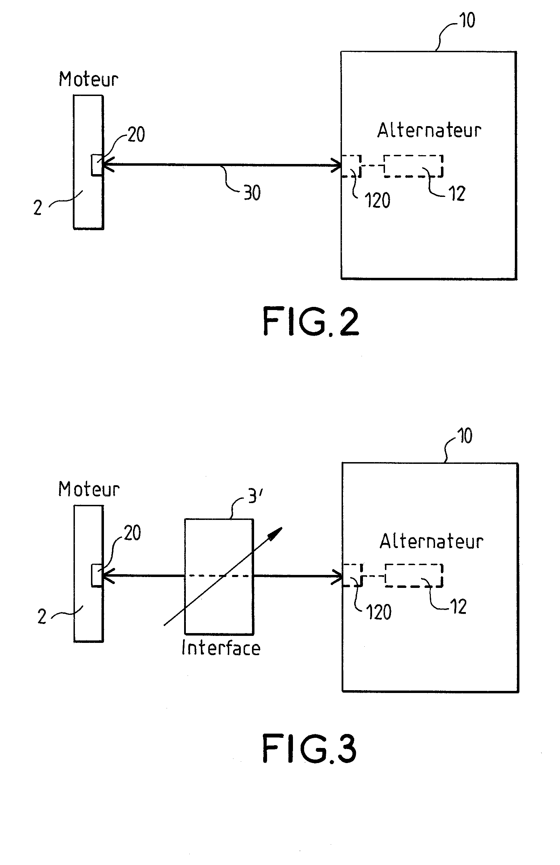

La figure 2 illustre très schématiquement un tel montage.

Sur cette figure, le couplage entre l'arbre de rotation 120 du rotor 12 de l'alternateur 10 et le vilebrequin 20 du moteur à combustion interne 2 est une simple liaison mécanique 30 symbolisée par une double flèche. Cette liaison mécanique 30 peut mettre en oeuvre des poulies, courroies de transmission, etc., de manière à obtenir un rapport de transformation de vitesse déterminé.

Que l'on utilise deux machines distinctes (alternateur et démarreur) ou une machine composite (démarreur-alternateur), dans le mode générateur d'énergie, il y lieu de prévoir un rapport de transformation de vitesse approprié à ce mode de fonctionnement, rapport qui est différent du mode moteur.

Aussi, lorsqu'on utilise une machine composite, on prévoit une interface mécanique permettant une commutation du rapport de transformation lorsque l'on passe d'un mode à l'autre.

Une telle disposition est illustrée très schématiquement par la figure 3. On dispose entre l'arbre 120 du rotor 12 de l'alternateur 10 et le vilebrequin 20 du moteur à combustion interne 2 une interface mécanique 3' autorisant une commutation du rapport de démultiplication de vitesse lorsqu'on passe d'un mode à l'autre, à savoir du mode de démarrage, c'est-à-dire production d'énergie mécanique, au mode de croisière, c'est-à-dire production d'énergie électrique.

On doit bien comprendre que dans le cadre de l'invention, le mot "démultiplication" doit être compris dans un sens général, la valeur du rapport en question pouvant être plus petite, égale à l'unité ou plus grande que l'unité.

Bien que restant compatible avec un tel fonctionnement "composite", l'invention concerne plus particulièrement le mode "générateur d'énergie".

Comme mentionné ci-dessus, la technologie généralement retenue pour la construction d'alternateurs par la majorité des fabricants est celle dite des "alternateurs à griffes".

L'expérience a montré que ces alternateurs ne sont pas exploités dans des conditions électriques optimales. Dans les faits, on constate une mauvaise adaptation d'impédance entre l'alternateur et le réseau de bord du véhicule, c'est-à-dire les appareils consommateurs d'énergie électrique. Les alternateurs actuels fonctionnent quasiment en court-circuit lorsqu'ils sont à pleine charge, ceci étant dû à une très forte inductance statorique.

Pour mettre en évidence cet état de fait, on a notamment effectué une simulation donnant l'évolution de la puissance de sortie en fonction de la tension de sortie. Pour ce faire, on peut mettre en oeuvre une configuration semblable à la configuration "opérationnelle" de la figure 1, mais en ne connectant pas la batterie 14 au pont de diodes 13. En outre l'impédance 17 (Z) a été rendue variable. On a fait débiter l'alternateur 10 soumis à des vitesses d'entraînement également variables en faisant varier l'impédance Z. L'excitation de l'inducteur (bobinage Br) a été rendu constante et fixée à une valeur maximale pour l'alternateur particulier 10 utilisé pour la simulation.

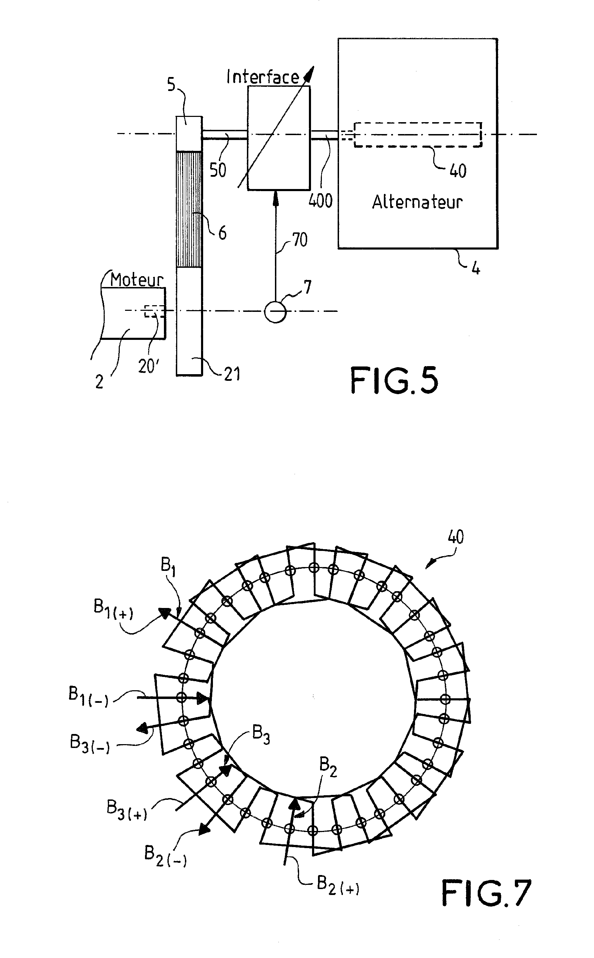

On a relevé une série de courbes de la puissance fournie P (en Watts, axe vertical) en fonction de la tension U (en volts) relevée aux bornes de l'impédance Z. Pour fixer les idées, l'allure générale de sept de ces courbes est représentée sur le graphique de figure 4, ce pour les vitesses de rotation d'un alternateur 10 particulier suivantes : v1 = 993 tr/mn ; v2 = 1986 tr/mn ; v3 = 3972 tr/mn ; v4 = 5958 tr/mn ; v5 = 7945 tr/mn ; v6= 9931 tr/mn ; v7 = 12910 tr/mn et v8 = 17876 tr/mn.

Cette simulation montre clairement que les alternateurs de série ne fournissent pas un maximum de puissance lorsqu'ils sont en utilisation dite nominale.

Un gain en puissance est donc possible pour des niveaux de courant identiques à ceux rencontrés en fonctionnement nominal, donc pour des échauffements également identiques. Il en résulte que l'on pourrait obtenir une puissance massique et volumique plus importante à une tension plus élevée. De même, le rendement pourrait progresser de façon notable car, pour un même courant, donc des pertes joules identiques, une puissance bien plus importante pourrait être fournie.

L'invention vise à pallier les inconvénients des dispositifs de l'art connu et à répondre aux besoins qui se font sentir, dont certains viennent d'être rappelés.

L'invention fournit un alternateur à grande efficacité.

Selon une première caractéristique importante, l'amplitude de la plage de vitesses de rotation dans laquelle fonctionne les alternateurs, notamment ceux du commerce du type à griffes précités, est réduite pour une plage de vitesses de rotation donnée du moteur d'entraînement.

Pour ce faire, il est mis en oeuvre une interface mécanique à variateur de vitesse, interface mécanique qui peut être semblable en soi à certaines interfaces mécaniques de l'art connu, mais dont la variation du rapport de démultiplication de vitesse est utilisée dans le mode de fonctionnement en générateur d'énergie.

Le variateur de vitesse est doté d'au moins deux rapports de démultiplication de vitesse, voire d'un nombre plus important.

Dans une réalisation, le variateur de vitesse est basé sur l'utilisation d'un train épicycloïdal plan à satellites simples.

Dans un mode de réalisation, selon une autre caractéristique importante, on part d'un alternateur classique, à gamme étendue de vitesses de rotation et on modifie des caractéristiques du ou des bobinage(s) du stator de l'alternateur de façon à diminuer son impédance.

De façon pratique, le nombre de spires du ou des bobinages le constituant est diminué. Il est également possible d'augmenter la section des conducteurs de ces bobinages, ce qui diminue leur résistance Ohmique.

Dans un mode de réalisation, on part d'un alternateur classique du commerce et la modification précitée du stator est obtenue par re-bobinage.

Dans une variante de réalisation de l'invention, le variateur permet aussi d'utiliser l'alternateur en mode moteur, en enclenchant un rapport de transformation de vitesse approprié à ce mode. De ce fait, il peut être utilisé comme démarreur.

Cette compatibilité avec des modes de fonctionnement "composites" (démarreur-alternateur) de l'art connu constitue un avantage supplémentaire.

L'invention a donc pour objet principal un ensemble à alternateur et organe d'accouplement à un moteur, caractérisé en ce que l'alternateur fonctionne au moins en un premier mode dit de génération d'énergie électrique, en ce que l'organe d'accouplement comprend un variateur de vitesse présentant au moins deux rapports de démultiplication de vitesses de rotation distincts, et en ce que le variateur de vitesse permet l'accouplement dans le mode de fonctionnement en générateur d'énergie électrique de l'alternateur avec un premier rapport de démultiplication de vitesses de rotation lorsque le moteur est animé d'une vitesse de rotation comprise dans une première plage dite basse et avec au moins un deuxième rapport de démultiplication de vitesses de rotation lorsque le moteur est animé d'une vitesse de rotation comprise dans une deuxième plage dite haute, les rapports de démultiplication de vitesses de rotation étant déterminés de manière à limiter l'amplitude de la plage des vitesses de rotation de l'alternateur.

L'invention concerne aussi un procédé de fabrication d'un alternateur pour un ensemble ainsi défini qui est caractérisé en ce qu'on part d'un alternateur classique, par exemple du type à griffes, prévu pour fonctionner sur une plage de vitesses étendue et en ce qu'on modifie le stator de cet alternateur de façon à en diminuer l'impédance de son bobinage. La diminution d'impédance peut être obtenue par diminution de l'inductance et/ou de la résistance du bobinage.

Dans une réalisation, l'alternateur prévu pour une plage de vitesses de rotation plus importante que la plage de vitesses de rotation de l'alternateur de l'ensemble est destiné à fonctionner sur la toute la plage de vitesses du moteur thermique avec un rapport unique de démultiplication et en ce que le rapport de diminution de l'impédance statorique de cet alternateur est de l'ordre de dix.

Pour diminuer l'inductance du bobinage, selon une réalisation, on diminue le nombre de spires et pour diminuer la résistance du bobinage, on fait appel à un fil de section supérieure à celle du fil conducteur utilisé dans l'alternateur de départ. On peut également utiliser les mêmes conducteurs que l'alternateur classique en mettant des spires en parallèles. On obtient ainsi une diminution du nombre de spires et une augmentation de la section globale des conducteurs.

L'invention va maintenant être décrite de façon plus détaillée en se référant aux dessins annexés, parmi lesquels :
- la figure 1 illustre très schématiquement un montage électrique 1 montrant les interconnexions principales entre des appareils consommateurs d'énergie électrique, un alternateur et une batterie dans un véhicule automobile ;
- la figure 2 illustre schématiquement un premier exemple de réalisation d'un alternateur couplé par une liaison mécanique simple à un moteur à combustion interne selon l'art connu ;
- la figure 3 illustre schématiquement un deuxième exemple de réalisation d'un alternateur-démarreur couplé à un moteur à combustion interne à l'aide d'une interface permettant une commutation entre un mode démarreur et un mode générateur de courant, selon l'art connu ;
- la figure 4 est un graphique représentant une série de courbes de la puissance fournie par un alternateur en fonction de la tension relevée aux bornes d'une impédance variable alimentée par cet alternateur, pour des vitesses de rotations différentes ;
- la figure 5 illustre schématiquement un ensemble électromécanique complet comprenant un alternateur, un variateur de vitesse conforme à l'invention et un moteur à combustion interne ;
- les figures 6A et 6B illustre deux états pris par un train épicycloïdal plan à satellites simples présentant des premier et deuxième rapports de démultiplication de vitesse ;
- la figure 7 illustre schématiquement un exemple de câblage d'un stator d'alternateur triphasé ;
- les figures 8A et 8B sont des graphiques de comparaison des performances en puissance et en rendement d'un alternateur classique et d'un alternateur conforme à l'invention en fonction de leur vitesse de rotation ; et
- la figure 9 est un graphique illustrant les puissances fournies par un alternateur classique et un alternateur conforme à l'invention en fonction de leurs vitesses de rotation et de celle du moteur à combustion interne les entraînant, ainsi que les plages comparées de variation de ces vitesses.

Dans ce qui suit, sans en limiter en quoi que ce soit la portée, on se placera ci-après dans le cadre de l'application préférée de l'invention, sauf mention contraire, c'est-à-dire dans le cas d'un alternateur utilisé pour l'alimentation en énergie électrique d'appareils consommateurs dans un véhicule automobile, cet alternateur étant entraîné par un moteur à combustion interne.

Un exemple de réalisation d'un alternateur et de son interface de liaison mécanique entre l'alternateur et un moteur d'entraînement comprenant un variateur de vitesse, selon un mode de réalisation préféré va maintenant être décrit par référence aux figures 5 à 9.

Sur ces figures, les éléments identiques portent les mêmes références et ne seront re-décrits qu'en tant que de besoin.

Dans un premier temps, il va être supposé que l'alternateur n'est utilisé qu'en mode générateur de courant, le moteur à combustion interne étant muni, par exemple, d'un démarreur séparé.

Selon l'invention, la plage de fonctionnement en vitesses de rotation de l'alternateur est réduite pour une plage donnée de vitesses de rotation du moteur à combustion interne. Pour ce faire, on dispose entre l'alternateur et le moteur à combustion interne qui l'entraîne une interface mécanique de couplage comprenant un variateur de vitesse, disposant d'au moins deux rapports de démultiplication de vitesse distincts. En soi, la configuration générale de cet ensemble mécanique est similaire à celle illustrée par la figure 3.

Cependant, le but premier du variateur de vitesses n'est pas d'assurer une commutation entre deux modes de fonctionnement, démarreur et générateur de courant, mais comme rappelé ci-dessus, de réduire la plage de fonctionnement en vitesses de rotation de l'alternateur lorsqu'il fonctionne en mode générateur de courant. Pour ce faire le rapport de démultiplication de vitesse varie en fonction de la vitesse de rotation atteinte par le moteur à combustion interne.

Pour fixer les idées, ce rapport de démultiplication passe, par exemple, de 2,75 (gamme de vitesses N° 1) à 1 (gamme de vitesses N° 2), lorsque le moteur à combustion interne atteint une vitesse prédéterminée, par exemple 2000 tr/mn, et inversement.

Il s'ensuit que lorsque le moteur tourne à bas régime, l'alternateur est entraîné à une vitesse de rotation relativement élevée. Le rapport de démultiplication propre au variateur de vitesses étant égal par exemple à l'unité, mais il est possible d'insérer un jeu de poulies-courroies d'entraînement de rapport de démultiplication constant, mais supérieur à l'unité.

La figure 5 illustre schématiquement un ensemble électromécanique complet comprenant un alternateur, désormais référencé 4, couplé à un moteur, qui ne nécessite aucune adaptation spécifique et, de ce fait, référencé 2 comme précédemment.

Le couplage s'effectue, selon une caractéristique de l'invention, via une interface mécanique à variateur de vitesse 5. Cette interface comporte au moins deux rapports de démultiplications distincts. L'interface 5 peut être disposée, sur un côté, sur l'arbre de rotation 400 du rotor 40 de l'alternateur 4. Elle est entraînée sur son autre côté par un deuxième arbre 50, lui-même entraîné par une poulie 51, que l'on appellera "poulie d'alternateur".

Le moteur 2, par exemple par son vilebrequin 20, entraîne une deuxième poulie 21. Le couplage mécanique entre les poulies 51 et 21 peut s'effectuer par l'intermédiaire d'une courroie de transmission 6. Le rapport entre les diamètres des poulies 51 et 21 détermine un rapport de démultiplication de vitesses de rotation constant.

On prévoit un détecteur 7 de vitesse de rotation du moteur à combustion interne 2 qui génère un signal de commande (liaison 70) entraînant la commutation du variateur de vitesse entre la gamme de vitesses N° 1 et la gamme de vitesses N° 2, lorsque la vitesse de rotation prédéterminée du moteur à combustion interne 2 est atteinte.

Dans un mode de réalisation préféré, le variateur de vitesse de l'interface 5 est constitué par d'un train épicycloïdal plan à satellites simples présentant des premier et deuxième rapports de démultiplication sur lequel on adapte un système qui permet d'obtenir deux vitesses de rotation (deux états distincts).

Un tel dispositif est bien connu en soi de l'homme de métier et il est inutile de le décrire en détail.

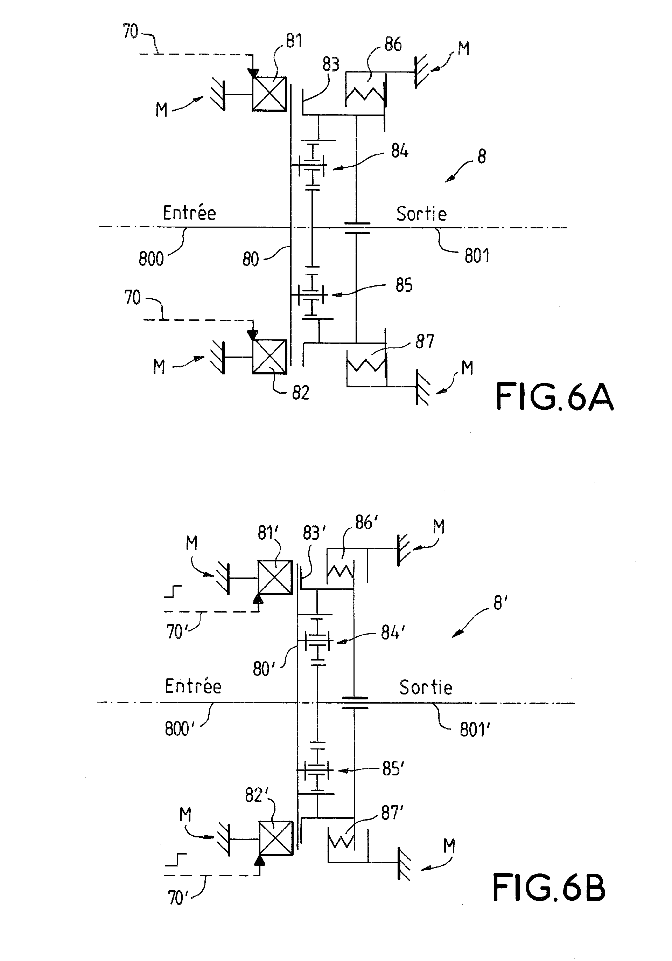

Les figures 6A et 6B illustrent schématiquement un tel mode de réalisation, dans ses deux états distincts, référencés 8 et 8'.

Sur ces deux figures, les différents organes composant le train épicycloïdal, 8 ou 8', portent les mêmes numéros de référence mais avec le signe "prime" sur la figure 6B

Pour le premier rapport de multiplication (figure 6A), l'arbre d'entrée 800 est constitué par le porte-satellite 80. La couronne 83, repoussée par des organes formant ressort, 86 et 87, est solidaire du bâti symbolisé par la masse M. L'arbre planétaire 801 est l'arbre de sortie. Les satellites portent les références 84 et 85.

Le train épicycloïdal 8 comporte également deux électroaimants, 81 et 82, non excités dans cet état, le signal de commande sur la liaison 70 étant inactivé.

Le deuxième rapport (figure 6B) peut être obtenu en solidarisant la couronne 83' du porte-satellite 80', c'est-à-dire en la désolidarisant du bâti. Cet état peut être obtenu en excitant les électroaimants 81' et 82'. Pour ce faire, on transmet un signal de commande sur la liaison 70. Les organes formant ressort, 86 et 87, sont comprimés par cette action. Ils repousseront la couronne (état 83, figure 6A) lorsque le signal de commande redeviendra inactif.

A titre d'exemple, pour fixer les idées, le premier rapport de démultiplication obtenu (figure 6A) peut être rendu égal à 2,75, et le deuxième rapport obtenu (figure 6B) rendu égal l'unité.

Dans un mode de réalisation, selon une deuxième caractéristique, le bobinage du stator de l'alternateur est modifié pour diminuer l'impédance de la machine. On peut diminuer l'inductance du bobinage statorique en diminuant le nombre de spires. On peut aussi augmenter la section des conducteurs, ce qui diminue de façon corrélative la résistance interne.

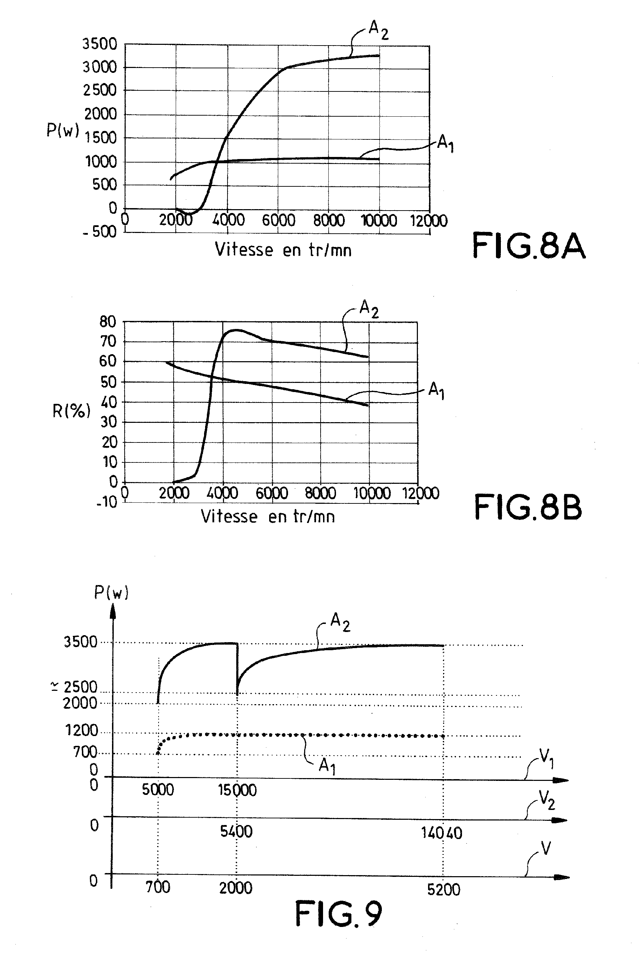

On va maintenant décrire un exemple de re-bobinage de machine par référence à la figure 7.

Sur cette figure, on a représenté schématiquement les enroulements du stator 40 d'un alternateur triphasé 4 (figure 5) classique, bobiné selon une configuration dite "ondulé". Les trois bobinages composant les enroulements sont référencés B1 à B3, et leurs extrémités sont référencées arbitrairement B1(+)-B1(-), B2(+)-B2(-) et B3(+)-B3(-), respectivement, étant entendu que le courant généré est un courant alternatif sinusoïdal. Comme il a été indiqué, chaque enroulement est connecté à un autre par une première extrémité et à un pont de diodes redresseuses par une seconde extrémité (voir figure 1).

Si on considère une phase (bobinage B1 par exemple), pour l'alternateur illustré, le constructeur a, par exemple, bobiné sa machine selon la méthode dite "deux fils en main" et a effectué six tours de stator 40.

Pour une machine modifiée conformément à l'invention, toujours à titre d'exemple, on effectue un bobinage "six fils en main" et on n'effectue que deux tours de stator 40.

Cette disposition permet d'optimiser l'adaptation d'impédance entre l'alternateur et les appareils consommateurs d'énergie.

Pour illustrer cette caractéristique avantageuse, on a réalisé des essais avec un alternateur standard non re-bobiné, c'est-à-dire d'un type dit "14 Volts" (le véhicule étant muni d'une batterie de 12 V : voir figure 1), et un alternateur re-bobiné comme explicité ci-dessus, c'est-à-dire en "4 Volts".

On impose une tension de 13.5 V aux bornes de l'alternateur. Il en résulte une excitation maximum car la tension de sortie se trouve toujours inférieure à la tension de consigne du régulateur de tension.

Sur le graphique de la figure 8A, on a représenté les courbes de variation de la puissance électrique fournie (en Watts) en fonction de la vitesse de rotation de l'alternateur (en tr/mn), pour un alternateur classique, A1, non re-bobiné, et un alternateur, A2, re-bobiné conformément à l'invention.

Les courbes du graphique de la figure 8B représentent les variations du rendement (en %) pour ces deux alternateurs, A1 et A2, toujours en fonction de la vitesse (en tr/mn).

On constate une augmentation de la puissance massique et volumique à partir d'une vitesse de rotation supérieure à 3800 tr/mn environ. L'amélioration peut aller jusqu'à atteindre un rapport de un à trois à partir de 6000 tr/mn.

Le rendement est également amélioré de plus de 20 % pour des vitesses supérieures à 3800 tr/mn environ.

Il devient donc possible de réduire la taille de l'alternateur pour une puissance donnée et de repousser les limites actuelles de fonctionnement des alternateurs, notamment du type dit "14V".

La seule contrainte rencontrée est qu'il est nécessaire d'adapter le rapport de démultiplication de vitesses de rotation existant entre le moteur à combustion interne et l'alternateur. Cette exigence est précisément réalisée par la mise en oeuvre d'un variateur de vitesse conforme à l'invention qui permet de faire fonctionner l'alternateur dans une plage de vitesses plus restreinte, mais dont la limite basse est plus élevée que dans les système de l'art connu. Cette dernière caractéristique permet de dépasser la vitesse de rotation minimale (typiquement 4000 tr/mn, comme le montre les courbes des figures 8A et 8B) pour laquelle les performances de l'alternateur re-bobiné sont inférieures à celles d'un alternateur non modifié.

On a représenté sur la figure 9 les variations de la puissance fournie par un alternateur du commerce particulier (axe vertical), A1, non modifié (alternateur classique "14V"), et le même alternateur, A2, re-bobiné conformément à l'invention, comme précisé ci-dessus, ce en fonction de la vitesse de rotation (axe horizontal V) du moteur à combustion interne (en tr/mn).

Sur ce même graphique, il est représenté deux axes horizontaux supplémentaires : un premier axe V1 représentant la vitesse de rotation de l'alternateur (en tr/mn) pour le premier rapport de démultiplication, et un deuxième axe V2, représentant la vitesse de rotation de l'alternateur (en tr/mn) pour le deuxième rapport de démultiplication.

Lorsque le variateur 5 (figure 5) fonctionne avec le premier rapport de démultiplication, la gamme de variation de vitesses de l'alternateur est située entre 5000 et 15000 tr/mn environ (axe V1), pour des variations de vitesses de rotation du moteur situées entre 700 et 2000 tr/mn, respectivement. La vitesse minimale de rotation de l'alternateur est donc bien supérieure à 3800 tr/mn (voir figures 8A et 8B). Elle correspond à une vitesse de rotation du moteur généralement inférieure à la vitesse dite de ralenti (généralement de l'ordre de 900 tr/mn).

Par contre, dans l'exemple illustré, lorsque le moteur atteint la vitesse de 2000 tr/mn, le variateur de vitesses de l'interface mécanique 5 (figure 5) effectue une commutation au deuxième rapport démultiplication. La gamme de vitesses de rotation de l'alternateur se situe entre 5400 et 14040 tr/mn (axe V2) pour des vitesses de rotation du moteur situées entre 2000 et 5200 tr/mn, respectivement.

La gamme de vitesses de rotation de l'alternateur est donc bien restreinte : entre 5000 et 15000 tr/mn, pour une gamme maximale de variation de vitesses de rotation du moteur typique, allant de 700 à 5000 tr/mn environ.

On constate, sur la courbe A2, que la puissance produite par l'alternateur modifié est comprise entre environ 2500 W et 3500 W.

L'alternateur d'origine (courbe A1), c'est-à-dire non modifié, ne produit qu'une puissance maximale de 1200 W dans les mêmes conditions d'utilisation et sans variateur de vitesse.

Comme il a été rappelé, l'alternateur conforme à l'invention peut être utilisé aussi en mode de fonctionnement moteur, notamment comme démarreur.

Dans le mode de réalisation préféré, la diminution de l'impédance de stator obtenue par le re-bobinage, permet de meilleures performances que dans le cas d'un alternateur classique.

Le variateur permet aussi, si on utilise l'alternateur en mode de fonctionnement moteur, d'en améliorer les performances.

A la lecture de ce qui précède, on constate aisément que l'invention atteint bien les buts qu'elle s'est fixés.

Il doit être clair cependant que l'invention n'est pas limitée aux seuls exemples de réalisations explicitement décrits, notamment en relation avec les figures 5 à 9.

Tout d'abord, d'autres types de variateur que celui des figures 6A et 6B, c'est-à-dire un train épicycloïdal, peuvent être mis en oeuvre sans sortir du cadre de l'invention. D'autre part, le nombre de rapports de démultiplication de vitesses de rotation n'est pas limité à deux. Le variateur de vitesse peut aussi être d'un type continu.

Enfin, les exemples numériques n'ont été fournis que pour mieux fixer les idées et ne sauraient constituer une quelconque limitation de la portée de l'invention.

L'invention n'est pas non plus limitée au seul domaine de l'industrie automobile. Les alternateurs conformes à l'invention peuvent être couplés à toute sorte de moteurs d'entraînement par une interface mécanique à variateur de vitesses également conforme à l'invention.

## Revendications

1. Procédé de réalisation d'un alternateur destiné à être associé à un organe d'accouplement à un moteur, l'alternateur fonctionnant au moins en un premier mode dit de génération d'énergie électrique, l'organe d'accouplement (5) comprenant un variateur de vitesse (8 ; 8') présentant au moins deux rapports de démultiplication de vitesses de rotation distincts, et ce variateur de vitesse (8 ; 8') permettant l'accouplement dans le mode de fonctionnement en générateur d'énergie électrique avec un premier rapport de démultiplication de vitesses de rotation lorsque le moteur (2) est animé d'une vitesse de rotation comprise dans une première plage, dite basse, et avec au moins un deuxième rapport de démultiplication de vitesses de rotation lorsque le moteur (2) est animé d'une vitesse de rotation comprise dans une deuxième plage, dite haute, les rapports de démultiplication de vitesses de rotation étant déterminés de manière à limiter la plage des vitesses de rotation de l'alternateur (4),
ce procédé étant **caractérisé en ce qu'**on fait appel à un alternateur du type prévu pour une plage de vitesses de rotation (N1, N2) étendue, plus importante que la plage de vitesses de rotation de l'alternateur associé à l'organe d'accouplement, et on diminue l'impédance statorique de cet alternateur prévu pour une plage de vitesses de rotation étendue.

2. Procédé selon la revendication 1, **caractérisé en ce que** l'alternateur prévu pour une plage de vitesses de rotation étendue est destiné à fonctionner sur toute la plage de vitesses du moteur thermique avec un rapport unique de démultiplication et **en ce que** le rapport de diminution de l'impédance statorique de cet alternateur est de l'ordre de dix.

3. Procédé selon la revendication 1 ou 2, **caractérisé en ce que** pour diminuer l'impédance statorique de l'alternateur à plage de vitesses de rotation étendue, on réduit le nombre de spires du bobinage du stator de cet alternateur.

4. Procédé selon l'une des revendications 1 à 3, **caractérisé en ce qu'**on fait appel à une section de bobinage du stator de l'alternateur qui est supérieure à la section des fils du bobinage du stator de gamme de vitesses de rotation étendue.

5. Procédé selon la revendication 4, **caractérisé en ce qu'**on augmente le diamètre des conducteurs par mise en parallèle de spires.

6. Procédé selon l'une des revendications précédentes, **caractérisé en ce que** l'alternateur à gamme de vitesses de rotation étendue est du type triphasé à griffes.

7. Procédé selon l'une des revendications 1 à 6, **caractérisé en ce que** le premier rapport de démultiplication de vitesses de rotation est égal à 2,75 et le deuxième rapport de démultiplication de vitesses de rotation est égal à l'unité.

8. Procédé selon l'une des revendications 1 à 6, **caractérisé en ce que** le variateur de vitesses présente un nombre de rapports de démultiplication de vitesses de rotation distincts supérieur à deux.

9. Procédé selon l'une des revendications 1 à 6, **caractérisé en ce que** le variateur de vitesses est à variation continue.

10. Procédé selon l'une des revendications précédentes, **caractérisé en ce que** l'alternateur (4) est apte à fonctionner en outre en un second mode dit moteur et dans ce second mode, il permet le démarrage du moteur à combustion interne et pendant le démarrage, le variateur de vitesses présente un rapport de démultiplication de vitesses de rotation prédéterminé, de manière à ce que l'alternateur présente un couple d'entraînement important.

11. Procédé de réalisation d'un alternateur destiné à être associé à un organe d'accouplement à un moteur, l'alternateur fonctionnant au moins en un premier mode dit de génération d'énergie électrique, **caractérisé en ce qu'**on fait appel à un alternateur du type prévu pour une plage de vitesses de rotation (N1, N2) étendue, plus importante que la plage de vitesses de rotation de l'alternateur associé à l'organe d'accouplement, et on diminue l'impédance statorique de cet alternateur prévu pour une plage de vitesses de rotation étendue.
